# EUROPÄISCHE PATENTSCHRIFT

(11) **EP 1 320 211 B1**
(45) Veröffentlichungstag und Bekanntmachung des Hinweises auf die Patenterteilung: **18.03.2020**
(21) Anmeldenummer: 02027968.3
(22) Anmeldetag: 13.12.2002
(51) Int. Cl.: H04L 1/16, H04L 1/18, H04L 1/00, H04L 25/03, H04L 27/26

(54) **Verfahren und Vorrichtung zur Sicherung einer verbindungsorientierten, bidirektionalen Übertragung von Datenblöcken durch adaptives Scrambling**
Method and apparatus for protecting a connection-oriented, bidirectional transmission of data blocks by adaptive scrambling
Procédé et dispositif de sécurisation d'une transmission bidirectionnelle en mode connexion par brouillage adaptif

(30) Priorität: 14.12.2001 DE 10161641
(43) Veröffentlichungstag der Anmeldung: 18.06.2003
(73) Patentinhaber: iAd Gesellschaft für Informatik, Automatisierung und Datenverarbeitung mbH, 90613 Grosshabersdorf (DE)
(72) Erfinder: Bumiller,Gerd Dipl.-Ing., 90768 Fürth/Vach (DE)
(74) Vertreter: Dreykorn-Lindner, Werner

(56) Entgegenhaltungen:
- WO-A-01/56219
- US-A- 5 588 009
- US-B1- 6 175 551
- US-B1- 6 317 854
- PATENT ABSTRACTS OF JAPAN Bd. 1999, Nr. 12, 29. Oktober 1999 (1999-10-29) -& JP 11 205279 A (TOSHIBA CORP), 30. Juli 1999 (1999-07-30) -& US 6 512 758 B1 (SATO KAZUMI ET AL) 28. Januar 2003 (2003-01-28)

## Beschreibung

Die Erfindung betrifft in erster Linie ein Verfahren zur Sicherung der verbindungsorientierten, bidirektionalen Übertragung von vorgegebenen Datenblöcken durch Scrambling. Weiterhin betrifft die Erfindung, gemäß Patentanspruch 10, eine Vorrichtung zur Durchführung des Verfahrens nach Anspruch 1.

In modernen Übertragungsverfahren für drahtlose wie auch für drahtgebundene Kommunikation - beispielsweise bei der Datenübertragung über das Stromnetz - werden Mehrträger - Modulationsverfahren, wie z.B. OFDM (orthogonal frequency division multiplex), kombiniert mit Methoden der Kanalcodierung eingesetzt; beispielsweise Faltungscodierung, Reed-Solomon-Codes und Turbo-Codes, welche unter den Begriff FEC (forward error correction) zusammengefasst werden. Beispiele hierfür sind im DE-Fachbuch "Nachrichtenübertragung" von Kammeyer, Karl Dirk:. B.G. Teubner Stuttgart 1992 und im DE-Fachbuch "Kanalcodierung" von Friedrichs, Bernd:. Springer Verlag 1995 ausführlich beschrieben.

Hieraus entstehen Systeme, in denen die Daten in Blöcken mit festen Längen übertragen werden. Nach der FEC sind die Daten in diesen Blöcken entweder frei von Fehlern oder mit vielen Fehlern behaftet. Um diese Blöcke korrekt zu erhalten, existieren verschiedene Protokolle, welche entweder die Fehlererkennung der FEC nutzen oder meistens über eigene Mechanismen zur Fehlererkenriung verfügen und dann die Wiederholung von Blöcken anfordern. Beispielsweise ist aus der DE 196 51 593 A1 eine Anordnung zum Optimieren der Datenübertragung über einen bidirektionalen Funkkanal bekannt, bei der senderseitig jeweils verschiedene Modulationsarten wählbar sind und die Coderate der Vorwärts-Fehlerkorrektur (FEC) sowie die Senderleistung einstellbar ist. Im einzelnen ist vorgesehen, dass jeweils senderseitig in Abhängigkeit von der empfangsseitig gemessenen und rückübertragenen Fehlerrate automatisch die Größe der Datenpakete und/oder die Modulationsart und/oder die Coderate und/oder die Senderleistung so geändert wird, dass empfangsseitig eine vorbestimmte Fehlerrate erreicht wird.

Die Fehlerrate ist besonders hoch, wenn durch die Abstraktion der Protokolle in den verschiedenen Ebenen, der Bezug zwischen den defekten Blöcken in der FEC und den wiederholten Blöcken der einzelnen Protokolle in den höheren Ebenen verloren geht.

Das Modulationsverfahren OFDM erzeugt ein rauschartiges Sendesymbol, wobei das Verhältnis Spitzenleistung zur mittleren Leistung des Sendesymbols von den Daten abhängt. Wird nun die Energie des Symbols auf die Spitzenleistung normiert, entsteht somit eine datenabhängige mittlere Sendeleistung für die einzelnen Symbole. Die mittlere Sendeleistung bestimmt das Signal-zu-Rausch-Verhältnis und somit die Übertragungssicherheit des einzelnen OFDM-Symbols. Dadurch ergibt sich für das OFDM-Symbol und den darin enthaltenen Datenblock eine datenabhängige Übertragungssicherheit.

Dies kann gerade für Wiederholungen ein sehr ungünstiger Effekt sein, so dass oft durch eine pauschale XOR-Verknüpfung der Daten mit einer pseudorandom-Folge - deren Periode mit der Länge des Datenblocks nicht korrelieren darf - versucht wird, ein von den Daten unabhängiges Übertragungsverfahren nachzubilden. Die XOR-Verknüpfung von Daten mit einer Folge wird allgemein als Scrambling bezeichnet. Durch das pauschale Scrambling werden für die Übertragung günstige Daten teilweise zu ungünstigen und umgekehrt. Beispielsweise ist aus der DE 42 02 682 A1 ein paralleler additiver Scrambler zum Verscrambeln eines in m-bit breite Worte parallel gewandelten seriellen Datenstromes bekannt, wobei m eine ganze , positive Zahl ist. In einer Vorrichtung zur Modulo-2-Addition wird der parallel gewandelte Datenstrom derart modulo-2-addiert, dass der serielle Datenstrom mit einer vorgegebenen Pseudo-Zufallsfolge verscrambelt wird. Im einzelnen ist vorgesehen, dass die Pseudo-Zufallsfolge in einem Speicher verschiebbar gespeichert ist und der Speicher S über m parallele Ausgänge mit der Vorrichtung zur Modulo-2-Addition verbunden ist. Schließlich ist eine Vorrichtung zur Verschiebung der gespeicherten Pseudo-Zufallsfolge vorhanden.

Es ist auch bekannt, die Daten unterschiedlichem Scrambling zu unterziehen und jeder daraus entstandene Datenblock wird dann der Kanalcodierung und Modulation unterworfen. Derjenige Block mit dem günstigsten Verhältnis aus Spitzenleistung und mittleren Leistung wird dann gesendet, wie dies beispielsweise von Müller-Weinfurtner, Stefan in der Dissertation an der Technischen Fakultät der Universität Erlangen-Nürnberg "OFDM for Wireless Communication", Shaker Verlag Aachen 2000 ausführlich beschrieben ist. Dies bedeutet in der Regel einen erheblichen Mehraufwand, der in den meisten Systemen - von der Kapazität her gesehen - nicht zur Verfügung steht. Gleiches gilt für das aus der DE 100 38 173 A1 bekannte Verfahren sowie Vorrichtung zum Erzeugen von Mehrfach-Scramblingcodes in einem Kommunikationssystem. Bei dem dort beschriebenen Verfahren verwendet jede Basisstation jeweils einen von dieser zugeordneten Primär-Scramblingcode und jeweils einen von Sätzen zugeordneten Sekundär-Scramblingcode, von denen jeder selbst aus mehreren Sekundär-Scramblingcodes besteht. Wenn ein Primär-Scramblingcode n von einem Generator zu erzeugen ist, wird der Anfangswert des Scramblingcodegenerators auf den Binärwert "n" gesetzt, um dadurch einen gewünschten Primär-Scramblingcode zu erzeugen. Wenn ein Sekundär-Scramblingcode n im Satz m von Sekundär-Scramblingcodes vom Scramblingcodegenerator zu erzeugen ist, wird der Anfangswert des Scramblingcodegenerators auf einen Wert eingestellt, der dadurch erhalten wird, dass der Primär-Scramblingcode n, m-mal verschoben wird, um dadurch den gewünschten Sekundär-Scramblingcode zu erzeugen.

Für die Implementierung erschwerend kommt hinzu, dass die Laufzeiten durch die Decodierung meistens sehr hoch sind und somit ein Datenblock nicht im nächsten Block beantwortet werden kann. Wie die vorstehende Würdigung des Standes der Technik aufzeigt, ist die Realisierung eines aufwandsgünstigen Übertragungsverfahren mit bisherigen Geräten und Verfahren nur sehr eingeschränkt möglich. Besonders bedeutsam ist dies, da die Sicherung der verbindungsorientierten, bidirektionalen Übertragung von vorgegebenen Datenblöcken von großem Nutzen ist und die Telekommunikations-Industrie als äußerst fortschrittliche, entwicklungsfreudige Industrie anzusehen ist, die sehr schnell Verbesserungen und Vereinfachungen aufgreift und in die Tat umsetzt.

JP11205279 sowie US6175551 offenbaren bestehende Verfahren zur Sicherung der Datenübertragung durch Scrambling.

Der Erfindung liegt gegenüber den bekannten Verfahren und Vorrichtungen die Aufgabe zugrunde, ein aufwandsgünstigen Übertragungsverfahren und eine Vorrichtung zur Realisierung des Verfahrens zu entwerfen, welches die von der Modulation und Kanalcodierung vorgegebenen Blockgrößen berücksichtigt und eine Sicherung der verbindungsorientierten, bidirektionalen Übertragung von vorgegebenen Datenblöcken ermöglicht.

Die Erfindung ist durch Ansprüche 1-12 definiert.

Das erfindungsgemäße Verfahren weist den Vorteil auf, dass durch die Anwendung eines gezielten, adaptiven Scramblings auf überraschend einfache Art und Weise die Anzahl der gegebenenfalls notwendigen Wiederholungen deutlich reduziert und somit die Rate der Blockfehler insgesamt gesenkt werden kann. Erfindungsgemäß erfolgt die Sicherung der verbindungsorientierten, bidirektionalen Übertragung von vorgegebenen Datenblöcken durch eine solche gezielte und modifizierte Wiederholung, welche berücksichtigt, dass die Übertragungssicherheit der Datenblöcke von dem Inhalt der Daten abhängt. Die Fehlererkennung wird entweder aus der FEC abgeleitet oder durch eigene Methoden, wie z.B. mit CRC (cyclic redundancy check, siehe auch Friedrichs, Bernd a.a.O), festgestellt. Weiterhin ist von Vorteil, dass - bei einer Wiederholung - die Daten nun mit einem Scrambling versehen werden, welches berücksichtigt, dass die vorherige Methode für die Übertragung anscheinend ungünstig war. Alleine durch diese Optimierung ist das Verfahren einem pauschalen Scrambling schon überlegen. Für die zweite Wiederholung wird das Scrambling auf diejenigen Datenstrukturen optimiert, welche bei den ersten beiden Scramblingmethoden nicht besonders gut abschneiden und so weiter.

Das erfindungsgemäße Verfahren und die Vorrichtung zur Realisierung des Verfahrens ermöglichen eine sichere Datenübertragung mit Datenflussmanagement bei festgelegten Blockgrößen und wie Messungen gezeigt haben, fast den optimalen Durchsatz von (1 - Blockfehlerrate) • Datenelementgröße pro Zeiteinheit.

Die Puffergrößen und Laufzeiten können dabei vergleichsweise klein gehalten werden. Die Restfehler dieses Verfahrens werden durch die Sicherheit der Fehlererkennung bestimmt.

Weiterhin weist die Erfindung den Vorteil auf, dass in vorteilhafter Weise die Wahrscheinlichkeit deutlich gesunken ist, dass die kontinuierliche Übertragung gestoppt werden muss, weil ein einzelner Block noch nicht übertragen wurde und die Puffer vollgelaufen sind. Auch bei einem unsicheren Kanal weist das erfindungsgemäße Verfahren insgesamt einen deutlich gesteigerten Datendurchsatz im Vergleich zu bekannten Verfahren auf.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- FIG. 1: das Blockschaltbild einer bevorzugte Ausgestaltung des Übertragungssystems gemäß der Erfindung und
- FIG. 2: die Struktur von Eingangs- und Ausgangspuffer sowie die logische Übertragung der Datenblöcke und den Rückkanal des Übertragungssystem nach FIG. 1.

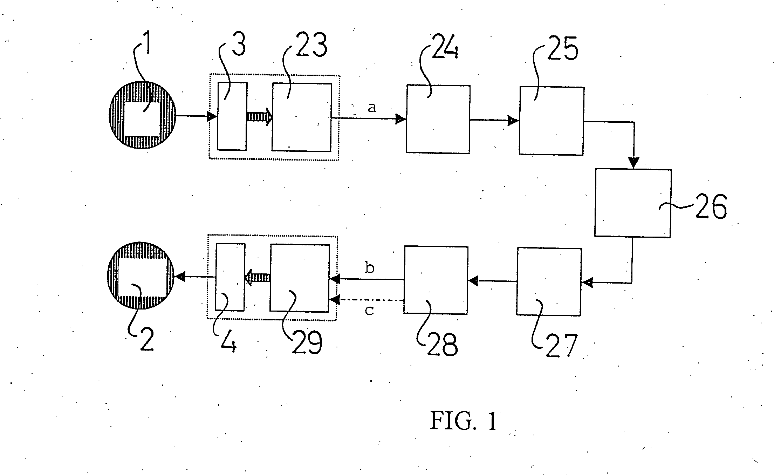

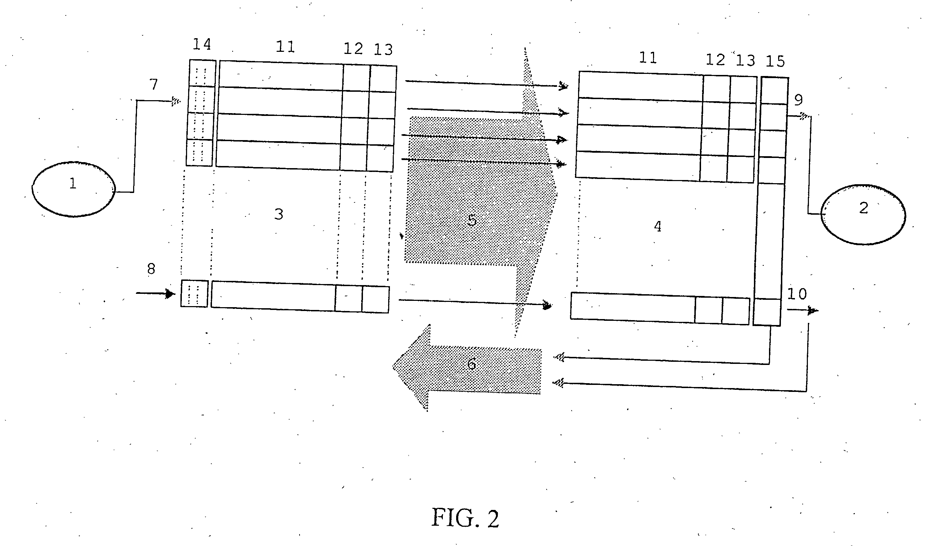

In FIG. 1 ist das Blockschaltbild einer bevorzugten Ausgestaltung des Übertragungssystems gemäß der Erfindung dargestellt, welches nachfolgend auch unter Bezugnahme auf FIG. 2 näher beschrieben und erläutert wird. Die Struktur eines Eingangspuffers 3 und eines Ausgangspuffers 4 sowie die logische Übertragung der Datenblöcke (Bezugszeichen 5) und den Rückkanal 6 zeigt im Detail FIG. 2.

Die Daten einer Datenquelle 1 werden in einen Eingangspuffer 3 eingeschrieben. Mit dem Eingangspuffer 3 sind Mittel 23 zur Aufbereitung des Datenblocks verbunden. Die aufbereiteten Datenblöcke werden einem Kanalencoder 24 zugeführt, welcher nachfolgend mit einem Modulator 25 verbunden ist. Auf dem Übertragungskanal 26 senden die beiden Teilnehmer (Datenquelle 1) einer Verbindung wechselseitig Pakete. Sind keine Daten vorhanden, wird ein leerer Datenblock versendet und dies im Protokoll vermerkt. Auch dieser leere Datenblock enthält alle Kontrollvariablen. Empfangsseitig ist ein Demodulator 27 angeordnet, welcher mit einem Kanaldecoder 28 verbunden ist. Am Ausgang des Kanaldecoders 28 sind Mittel 29 zur Auswertung des Datenblocks angeschlossen, wobei der ausgewertete Datenblock dann über einen Ausgangspuffer 4 einer Datensinke 2 zugeführt wird. Mit dem Bezugszeichen a ist die Übergabe des Datenblocks, mit dem Bezugszeichen b die Übernahme des empfangenen Datenblocks und mit dem Bezugszeichen c gegebenenfalls die Fehlererkennung von der Kanaldecodierung gekennzeichnet.

Der Eingangspuffer 3 besteht aus einem Ringspeicher von Datenelementen, einem Index 7, der auf das Datenelement zeigt, in das die Datenquelle 1 gerade schreibt, und einem Index 8, welcher das letzte nicht belegte Datenelement angibt. Einem Datenelement im Eingangspuffers 3 entsprechen Speicherplätze 11 für Daten in der Größe, wie Daten in einem Datenblock über den Kanal 26 gesendet werden, sowie Speicherplätze 12 für eine Längeninformation für die Daten, einem Speicherplatz für ein Kontrollbit 13 und zusätzlich Speicherplätze für eine Kontrollvariable 14, in der mehrere Zustände gespeichert werden.

Das Gegenstück auf der Empfangsseite ist der Ausgangspuffer 4, der neben den beiden Indexes (9 für die Ausgabe zur Datensinke und 10 zur Kennzeichnung des letzten freigegeben Datenelements), aus der gleichen Anzahl von Datenelementen wie der Eingangspuffer 3 besteht. Ein Datenelement im Ausgangspuffer 4 weist ebenfalls Speicherplätze für Daten in der Größe, wie Daten in einem Datenblock über den Kanal gesendet werden, eine Längeninformation für die Daten und ein Kontrollbit. Zusätzlich hat jedes Datenelements des Ausgangspuffers 4 ein Bit zur Kennzeichnung, ob dieses Datenelement schon fehlerfrei empfangen wurde, auf.

Die Datenelemente im Eingangs- und Ausgangspuffer 3, 4 werden durch deren Indizierung einander zugeordnet. Ein Datenaustausch über den Übertragungskanal 26 findet nur zwischen dem Datenelement A des Eingangspuffers 3 und dem eindeutig zugeordneten Datenelement A des Ausgangspuffer 4 statt. Hierzu enthält das Protokoll den Index des übertragenen Datenelements. In der Kontrollvariable 14 des Datenelements im Eingangspuffer 3 wird erfindungsgemäß dabei verwaltet, welches Scrambling bereits ausgeführt wurde, und im Protokoll ist vermerkt, nach welcher Scramblingmethode die Daten bearbeitet sind.

Die Fehlererkennung nach der Übertragung eines Datenblockes erfolgt empfangsseitig entweder in der FEC oder mit einer Methode des Protokolls, wie z.B. mit CRC-Code (siehe beispielsweise Friedrichs, Bernd a.a.O.).

Bei einem Übertragungsverfahren mit datenabhängiger Übertragungssicherheit werden erfindungsgemäß durch Scrambling die Struktur der Daten so beeinflusst, dass die Wahrscheinlichkeit der erfolgreichen Übertragung maximiert wird. Dies bedeutet bei OFDM, dass das Verhältnis aus Spitzenleistung zur mittleren Leistung minimiert werden muss.

Die Daten der Datenquelle 1 sind meistens nicht stochastisch unabhängig und haben somit eine Struktur. Für die erste Übertragung eines Datenelements wird nun ein Scrambling verwendet, das aus Daten mit einer angenommenen Struktur, einen Datenblock mit maximaler Übertragungssicherheit erzeugt. Dieses Scrambling ist von der verwendeten Kanalcodierung und Modulation abhängig, wobei wenn die Daten nicht die angenommene Struktur haben, es hier zu einer schlechteren Übertragungssicherheit kommen kann als ohne Scrambling.

Die Erfindung beruht auf der Erkenntnis, dass wenn ein Datenelement wiederholt werden muss, davon auszugehen ist, dass die erste Sendung eine ungünstige Übertragungssicherheit hatte.

Erfindungsgemäß wird das Scrambling für die erste Wiederholung so optimiert, dass speziell Datenstrukturen, welche bei der ersten Sendung eine ungünstige Übertragungssicherheit hätten, nun bei der Wiederholung eine günstige Übertragungssicherheit haben. Alleine durch diese Optimierung ist das Verfahren einem pauschalen Scrambling schon überlegen.

Für die zweite Wiederholung wird das Scrambling auf diejenigen Datenstrukturen optimiert, welche bei den ersten beiden Scramblingmethoden nicht besonders gut abschneiden und so weiter.

Wie umfangreiche Untersuchungen aufgezeigt haben, bringt nach mehr als vier Scramblingmethoden eine Optimierung keine weitere Verbesserung mehr, so dass bei der vierten Wiederholung wieder mit dem ersten Scrambling begonnen werden kann. Der Übertragungskanal ist dann in der Regel vollständig gestört und erst nach Ende der Störung kann überhaupt wieder übertragen werden.

Insgesamt weist das erfindungsgemäße Verfahren den Vorteil auf, dass durch dieses gezielte Scrambling für die einzelnen Blöcke, die Anzahl der gegebenenfalls notwendigen Wiederholungen deutlich reduziert und somit die Rate der Blockfehler insgesamt gesenkt werden. Außerdem ist die Wahrscheinlichkeit deutlich gesunken, dass die kontinuierliche Übertragung gestoppt werden muss, weil ein einzelner Block noch nicht übertragen wurde und die Puffer voll gelaufen sind. Dies alles führt bei einem unsicheren Kanal zu einem deutlich gesteigerten Datendurchsatz.

Im weiteren wird näher auf die Funktionsweise der erfindungsgemäßen Vorrichtung eingegangen. War die Übertragung fehlerfrei, werden die Daten in das Datenelement des Ausgangspuffers 4 eingetragen und das zugeordnete Bit 15 zur Kennzeichnung für fehlerfreien Empfang gesetzt. Nach der Ausgabe der Daten an die Datensinke 2, werden die beiden Indexes 9, 10 am Ausgangspuffer 4 aktualisiert und dabei auch das Bit 15 zur Kennzeichnung für fehlerfreien Empfang der freigegeben Datenelemente gelöscht.

Da in der Übertragung Laufzeiten bestehen, kann auch nach diesem Zeitpunkt noch eine Wiederholung des ursprünglichen Datenelements empfangen werden. Um diese von neuen Daten zu unterscheiden, wird ein Datenelement Kontrollbit 13 im Protokoll mit übertragen. Dieses Bit wechselt bei neuen Daten und bleibt bei allen Wiederholungen gleich. Sender und Empfänger müssen dieses Datenelement Kontrollbit 13 zu jedem Datenelement verwalten. War die Übertragung fehlerbehaftet oder eine Wiederholung eines schon korrekt empfangenen Datenpakets, so wird der Block verworfen.

Im Rückkanal 6 werden die Bits 15 zur Kennzeichnung für fehlerfreien Empfang für alle Datenelemente und der Index 10 des letzten freigegebenen Datenelements übertragen. Wenn dieser Block bereits korrekt empfangen wurde, ist dem Sender (Datenquelle 1) somit bekannt, welche Datenelemente erfolgreich übertragen wurden. Die anderen Datenelemente werden wiederholt.

Aus dem Index 10 des letzten freigegebenen Datenelements erkennt der Sender, bis zu welchem Datenelement im Empfänger(Datensinke 2) die Daten bereits an die Datensinke 2 übertragen hat. Hieraus ergibt sich dann automatisch ein Datenflussmanagement.

Da es sich auch um ein bidirektionales Übertragungssystem handeln kann, werden auch in beiden Richtungen Nutzdaten zu übertragen sein. Das gleiche erfindungsgemäße Verfahren kann sowohl in der Hinrichtung (von einem Sender zu einem Empfänger) als auch in Gegenrichtung (von einem Empfänger zu einem Sender) benutzt werden. Der Rückkanal ist somit ein Teil des Protokolls eines zu sendenden Blocks.

Bei diesem Verfahren können die Datenraten der beiden Richtungen durchaus unsymmetrisch sein. Eine hier definierte Verbindung kann auch ein Teil eines größeren Systems mit mehreren Verbindungen gleichzeitig und einer TDMA- bzw. CDMA-Technik (siehe beispielsweise Kammeyer, Karl Dirk a.a.O.), allgemein auch Vielfachzugriffstechnik genannt, sein.

Die Leistungsfähigkeit des Systems wird maßgeblich auch von dem Verfahrensablauf bestimmt, der festlegt, wann welches Datenelement gesendet wird. Hierzu werden in den Datenelementen des Eingangspuffers 3 noch verschiedene Kontrollvariablen 14 benötigt.

Der Verfahrenablauf ist vorzugsweise wie folgt:
1. Suche in den Datenelementen des Eingangspuffer 3 diejenigen, welche vom Empfänger noch nicht als korrekt Empfangen bestätigt oder sogar schon freigegeben wurden und für welche die letzte Sendung länger zurückliegt, als der Empfänger zum Bestätigen eines korrekten Empfangs benötigt. Existieren mehrere, so nehme zur Wiederholung das älteste Datenelement.
2. Liegt kein Datenelement zur Wiederholung vor, so überprüfe, ob neue Daten vorhanden sind und übertrage gegebenenfalls auch ein nur teilweise gefülltes Datenelement.
3. Liegen keine neuen Daten vor, suche nach einem Datenelement mit Daten, dessen korrekter Empfang noch nicht bestätigt ist und wiederhole dieses vorzeitig. Existieren mehrere, so nehme das Datenelement, dessen letzte Sendung am längsten zurückliegt.
4. Wird da auch kein Datenelement gefunden, so sende einen leeren Block.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich.

## Patentansprüche

1. Verfahren zur Sicherung der verbindungsorientierten, bidirektionalen Übertragung von vorgegebenen Datenblöcken (5) durch Scrambling, bei dem:
• sendeseitig eine Wiederholung eines Datenblockes (5) mit einem modifizierten Scrambling, nach Maßgabe einer empfangsseitigen Fehlererkennung und unter Berücksichtigung, dass die Übertragungssicherheit der Datenblöcke(5) von dem Inhalt der Daten abhängt, durchgeführt wird,
• zur Erhöhung der Übertragungssicherheit, das modifizierte Scrambling für die Wiederholung vorgenommen wird und berücksichtigt wird, dass das vorherige Scrambling für die Übertragung anscheinend ungünstig war,
• ein Rückkanal (6) ein Teil des Protokolls eines zu sendenden Datenblocks (5) ist, und
• ein Datenaustausch über den Übertragungskanal (26) nur zwischen einem jeweiligen Datenelement eines Eingangspuffers (3) und einem diesem eindeutig zugeordneten Datenelement im empfangsseitigen Ausgangspuffer (4) stattfindet,
wobei bis zu vier Wiederholungen des Datenblockes mit zu vorhergehenden Aussendungen verschiedenen Scramblings verwendet durchgeführt werden und dass bei der vierten Wiederholung wieder mit dem ersten Scrambling begonnen wird und der Übertragungskanal vorübergehend als vollständig gestört angesehen wird.

2. Verfahren nach Anspruch 1, wobei im Falle der fehlerfreien Übertragung, die Daten in das Datenelement des Ausgangspuffers (4) eingetragen werden und ein zugeordnetes Bit (15) zur Kennzeichnung für fehlerfreien Empfang gesetzt wird und dass nach der Ausgabe (9) der Daten an eine Datensinke (2) zwei Indexe (9, 10) am Ausgangspuffer (4) aktualisiert werden und dabei auch das Bit (15) zur Kennzeichnung für fehlerfreien Empfang der freigegebenen Datenelemente gelöscht wird.

3. Verfahren nach Anspruch 1, wobei zur Berücksichtigung von Laufzeiten und zur Unterscheidung zwischen neuen Daten oder Wiederholung bereits empfangener Daten ein Kontrollbit (13) mit übertragen wird, welches den binären Zustand bei neuen Daten wechselt und bei allen Wiederholungen gleich bleibt.

4. Verfahren nach Anspruch 2, wobei im Rückkanal (6) die Bits zur Kennzeichnung für fehlerfreien Empfang (15) für alle Datenelemente und der Index (10) des letzten freigegebenen Datenelements übertragen werden.

5. Verfahren nach einem der Ansprüche 1 bis 4, wobei weitere Kontrollvariablen (14) vorgesehen sind, welche auf folgenden Verfahrensschritten beruhen:
a) Suche in den Datenelementen des Eingangspuffers (3) diejenigen mit Daten, welche vom Empfänger noch nicht als korrekt Empfangen bestätigt (15) oder sogar schon freigegeben (10) wurden und die letzte Sendung länger zurückliegt, als der Empfänger zum Bestätigen eines korrekten Empfangs benötigt. Existieren mehrere, so nehme zur Wiederholung das älteste Datenelement.
b) Liegt kein Datenelement zur Wiederholung vor, so überprüfe (13), ob neue Daten vorhanden sind und übertrage gegebenenfalls auch ein nur teilweise gefülltes Datenelement.
c) Liegen keine neuen (13) Daten vor, suche nach einem Datenelement mit Daten, dessen korrekter Empfang noch nicht bestätigt ist und wiederhole dieses vorzeitig. Existieren mehrere, so nehme das Datenelement, dessen letzte Sendung am längsten zurückliegt.
d) Wird da auch kein Datenelement gefunden, so sende einen leeren Block.

6. Verfahren nach einem der Ansprüche 1 bis 5, wobei ein Mehrträger-Modulationsverfahren, welches ein von den Daten abhängiges Verhältnis von Spitzen- zur mittleren Leistung hat und/oder eine variable Energieverteilung auf den einzelnen Trägern hat.

7. Verfahren nach einem der vorstehenden Ansprüche, wobei die Datenraten zwischen den beiden Teilnehmern unsymmetrisch sind.

8. Verfahren nach Anspruch 1, wobei die beiden Teilnehmer einer Verbindung wechselseitig Pakete senden und falls keine Daten vorhanden sind, wird ein leerer Datenblock (5) versendet und dies im Protokoll vermerkt.

9. Verfahren nach Anspruch 1 und 5, wobei in der Kontrollvariablen (14) des Datenelements im Eingangspuffer (3) verwaltet wird, welches Scrambling bereits ausgeführt wurde, und dass im Protokoll vermerkt ist, nach welcher Scramblingmethode die Daten bearbeitet sind. Hilfsantrag 3.

10. Vorrichtung zur Sicherung der verbindungsorientierten, bidirektionalen Übertragung von vorgegebenen Datenblöcken (5) durch Wiederholung eines Datenblockes (5) mit einem modifizierten Scrambling nach Maßgabe einer empfangsseitigen Fehlererkennung und unter Berücksichtigung, dass die Übertragungssicherheit der Datenblöcke (5) von dem Inhalt der Daten abhängt, wobei die Vorrichtung derart ausgestaltet ist, dass:
• zur Erhöhung der Übertragungssicherheit das modifizierte Scrambling für die Wiederholung vorgenommen wird und berücksichtigt wird, dass das vorherige Scrambling für die Übertragung anscheinend ungünstig war, ein Rückkanal (6) ein Teil des Protokoll eines zu sendenden Datenblocks (5) ist,
• die Daten einer Datenquelle (1) in einen Eingangspuffer (3), eingeschrieben werden,
• mit dem Eingangspuffer (3) Mittel (23) zur Aufbereitung des Datenblocks (5) verbunden sind, wobei die aufbereiteten Datenblöcke (5) einem Kanalencoder (24) zugeführt werden, welcher nachfolgend mit einem Modulator (25) verbunden ist,
• auf dem Übertragungskanal (26) Datenblöcke (5) wechselseitig übertragen werden, empfangsseitig ein Demodulator (27) angeordnet ist, welcher mit einem Kanaldecoder (28) verbunden ist,
• am Ausgang des Kanaldecoders (28) Mittel (29) zur Auswertung des Datenblocks (5) angeschlossen sind und
• der ausgewertete Datenblock (5) dann über einen Ausgangspuffer (4), bestehend aus einem Ringspeicher von Datenelementen, einer Datensinke (2) zugeführt wird,
wobei bis zu vier Wiederholungen des Datenblockes mit zu vorhergehenden Aussendungen verschiedenen Scramblings durchgeführt werden und dass bei der vierten Wiederholung wieder mit dem ersten Scrambling begonnen wird und der Übertragungskanal vorübergehend als vollständig gestört angesehen wird.

11. Vorrichtung nach Anspruch 10, wobei der Eingangspuffer (3) aus einem Ringspeicher für Datenelemente besteht.

12. Vorrichtung nach Anspruch 10, wobei ein Index (7) vorgesehen ist, der auf das Datenelement zeigt, in den die Datenquelle (1) gerade schreibt, dass ein weiterer Index (8) vorgesehen ist, welcher das letzte nicht belegte Datenelement angibt und dass ein Datenelement des Eingangspuffers (3) aus einem Speicher für Daten (11) in der Größe, wie Daten in einem Datenblock über den Kanal gesendet werden, einer Längeninformation (12) für die Daten, einem Kontrollbit (13) und zusätzlich einer Kontrollvariable (14) in der mehrere Zustände gespeichert werden, besteht.

## Claims

1. A method for securing the connection-oriented, bi-directional transmission of predetermined data blocks (5) by scrambling, in which:
• on the transmission side, a repetition of a data block (5) with a modified scrambling is carried out on the transmission side, in accordance with a reception-side error detection and taking into account that the transmission security of the data blocks (5) depends on the content of the data,
• to increase the transmission security, the modified scrambling is carried out for repetition and is taken into account that the previous scrambling was inconvenient for transmission,
• a return channel (6) is a part of the protocol of a data block (5) to be transmitted and
• a data exchange takes place via the transmission channel only between a respective data element of an input buffer and a data element uniquely assigned to said input buffer in the receiving-side output buffer (4), wherein up to four repetitions of the data block with scrambling, which are different from previous transmissions are used, and in that, in the fourth repetition, the first scrambling is started again and the transmission channel is considered to be completely disturbed.

2. The method according to claim 1, wherein, in the case of error-free transmission, the data are entered into the data element of the output buffer (4) and an associated bit (15) is set for identification for error-free reception, and in that, after the output (9) of the data to a data sink (2), two indexes (9, 10) are updated at the output buffer (4) and the bit (15) for identification for error-free reception of the released data elements is also deleted.

3. The method according to claim 1, wherein, in order to take into account propagation times and to distinguish between new data or repetition of already received data, a control bit (13) is transmitted, which changes the binary state in the case of new data and remains the same for all repetitions.

4. The method according to claim 2, wherein the bits for identification for error-free reception (15) for all data elements and the index (10) of the last released data element are transmitted in the return channel (6).

5. The method according to one of claims 1 to 4, wherein further control variables (14) are provided, which are based on the following method steps:
a) Search in the data elements of the input buffer (3) those with data, which have not yet been confirmed by the receiver as correctly received (15) or even already released (10) and the last transmission is back longer than the receiver needs to confirm correct reception. If several exist, takes the oldest data element.
b) If no data element is present for repetition, check (13) checks whether new data are present and if necessary also transmits an only partially filled data element.
c) If no new (13) data are present, search for a data element with data, the correct reception of which has not yet been confirmed and reproduces the latter prematurely. If there are several, then takes the data element, the last transmission of which is at the longest.
d) If no data element is found, then transmit an empty block.

6. The method according to one of claims 1 to 5, wherein a multi-carrier modulation method, which depending on the data has a ratio of peaks-to average power and/or has a variable energy distribution on the individual carriers.

7. The method according to one of the preceding claims, wherein the data rates between the two subscribers are asymmetrical.

8. The method according to claim 1, wherein the two subscribers of a connection transmit packets alternately and if no data are present, an empty data block (5) is sent and this is noted in the protocol.

9. The method according to claim 1 and 5, wherein in the control variable (14) of the data element in the input buffer (3) it is managed which scrambling has already been executed, and that in the protocol it is noted according to which scrambling method the data are processed.

10. A device for securing the connection-oriented, bidirectional transmission of predetermined data blocks (5) by repetition of a data block (5) with a modified scrambling in accordance with a reception-side error detection and taking into account that the transmission reliability of the data blocks (5) depends on the content of the data, wherein the device is designed in such a way that:
• in order to increase the transmission security, the modified scrambling is carried out for repetition and it is taken into account that the previous scrambling was inconvenient for transmission, a return channel (6) is part of the protocol of a data block (5) to be transmitted,
• the data of a data source (1) are written into an input buffer (3),
• means (23) for processing the data block (5) are connected to the input buffer (3), wherein the processed data blocks (5) are fed to a channel encoder (24), which is subsequently connected to a modulator (25),
• data blocks (5) are alternately transmitted on the transmission channel (26), a demodulator (27) is arranged on the receiving side, which demodulator (27) is connected to a channel decoder (28),
• means (29) for evaluating the data block (5) are connected to the output of the channel decoder (28) and
• the evaluated data block (5) is then supplied via an output buffer (4), consisting of a ring memory of data elements, to a data sink (2), wherein up to four repetitions of the data block with scramblings which are different from previous transmissions are carried out, and in that, in the fourth repetition, the first scrambling is started again and the transmission channel is considered to be completely disturbed.

11. The apparatus according to claim 10, wherein the input buffer (3) consists of a ring memory for data elements.

12. The apparatus according to claim 10, wherein an index (7) is provided, which points to the data element in which the data source (1) just writes, that a further index (8) is provided, which indicates the last unoccupied data element and that a data element of the input buffer (3) consists of a memory for data (11) in the size such as data in a data block transmitted via the channel, as a length information (12) for the data, as a control bit (13) and additionally as a control variable (14) in which a plurality of states are stored.

## Revendications

1. Un procédé de sécurisation de la transmission bidirectionnelle orientée connexion de blocs de données prédéterminés (5) par brouillage, dans lequel :
• à côté émission, une répétition d'un bloc de données (5) avec un brouillage modifié est réalisée, conformément à une détection d'erreur côté réception et prise en compte du fait que la sécurité de transmission des blocs de données (5) dépend du contenu des données,
• pour augmenter la sécurité de transmission, l'embrouillage modifié est réalisé pour une répétition et est pris en compte que l'embrouillage précédent était gênant pour la transmission,
• un canal de retour (6) est une partie du protocole d'un bloc de données (5) à transmettre et
• un échange de données s'effectue par l'intermédiaire du canal de transmission uniquement entre un élément de données respectif d'un tampon d'entrée (3) et un élément de données attribué de manière unique audit tampon d'entrée dans le tampon de sortie côté réception (4), dans lequel jusqu'à quatre répétitions du bloc de données avec brouillage, qui sont différentes des transmissions précédentes sont utilisé, et en ce que, dans la quatrième répétition, le premier brouillage est à nouveau démarré et le canal de transmission est considéré comme étant complètement perturbé.

2. Le procédé selon la revendication 1, dans lequel, dans le cas d'une transmission sans erreur, les données sont entrées dans l'élément de données du tampon de sortie (4) et un bit associé (15) est réglé pour une identification pour une réception sans erreur, et en ce que, après la sortie (9) des données vers un collecteur de données (2), deux indices (9, 10) sont mis à jour au niveau du tampon de sortie (4) et le bit (15) pour l'identification pour une réception sans erreur des éléments de données libérés est également supprimé.

3. Le procédé selon la revendication 1, dans lequel, afin de prendre en compte les temps de propagation et de faire la distinction entre de nouvelles données ou la répétition de données déjà reçues, un bit de commande (13) est transmis, qui change l'état binaire dans le cas de nouvelles données et reste le même pour toutes les répétitions.

4. Le procédé selon la revendication 2, dans lequel les bits d'identification pour la réception sans erreur (15) pour tous les éléments de données et l'indice (10) du dernier élément de données libéré sont transmis dans le canal de retour (6).

5. Le procédé selon l'une des revendications 1 à 4, dans lequel d'autres variables de commande (14) sont fournies, qui sont basées sur les étapes de procédé suivantes :
a) Recherche dans les éléments de données du tampon d'entrée (3) ceux avec des données, qui n'ont pas encore été confirmés par le récepteur comme correctement reçus (15) ou même déjà libérés (10) et que la dernière transmission est plus longue que le récepteur doit confirmer la réception correcte. S'il plusieurs existe, il prend l'élément de données le plus ancien.
b) Si aucun élément de données n'est présent pour la répétition, vérifie (13) si de nouvelles données sont présentes et, si nécessaire, transmet également un élément de données uniquement partiellement rempli.
c) Si aucune nouvelle donnée (13) n'est présente, recherche d'un élément de données avec des données dont la bonne réception n'a pas encore été confirmée et reproduit prématurément ce dernier prématurément. S'il y a plusieurs, prend alors l'élément de données dont la dernière transmission est plus longue.
d) Si aucun élément de données n'est trouvé, alors transmettre un bloc vide.

6. Le procédé selon l'une des revendications 1 à 5, dans lequel un procédé de modulation à porteuses multiples, qui, en fonction des données, présente un rapport de pics à puissance moyenne et/ou une distribution d'énergie variable sur les supports individuels.

7. Le procédé selon l'une des revendications précédentes, dans lequel les débits de données entre les deux abonnés sont asymétriques.

8. Le procédé selon la revendication 1, dans lequel les deux abonnés d'une connexion transmettent alternativement des paquets et si aucune donnée n'est présente, un bloc de données vide (5) est envoyé et cela est noté dans le protocole.

9. Le procédé selon la revendication 1 et 5, dans lequel dans la variable de commande (14) de l'élément de données dans le tampon d'entrée (3), il est géré que le brouillage a déjà été exécuté, et en ce que dans le protocole il est noté selon quel procédé de brouillage les données sont traitées.

10. Un dispositif de sécurisation de la transmission bidirectionnelle orientée connexion de blocs de données prédéterminés (5) par répétition d'un bloc de données (5) avec un brouillage modifié selon d'une détection d'erreur côté réception et prenant en compte le fait que la fiabilité de transmission des blocs de données (5) dépend du contenu des données, le dispositif étant conçu de telle sorte que :
• pour augmenter la sécurité de transmission, l'embrouillage modifié est réalisé pour une répétition et il est pris en compte que l'embrouillage précédent était gênant pour la transmission, un canal de retour (6) fait partie du protocole d'un bloc de données (5) à transmettre,
• les données d'une source de données (1) sont écrites dans un tampon d'entrée (3),
• des moyens (23) pour traiter le bloc de données (5) sont connectés au tampon d'entrée (3), dans lequel les blocs de données traités (5) étant amenés à un codeur de canal (24), qui est ensuite relié à un modulateur (25),
• des blocs de données (5) sont transmis en alternance sur le canal de transmission (26), un démodulateur (27) est disposé côté réception, lequel démodulateur (27) est relié à un décodeur de canal (28),
• des moyens (29) pour évaluer le bloc de données (5) sont connectés à la sortie du décodeur de canal (28) et
• le bloc de données évalué (5) est ensuite fourni par l'intermédiaire d'un tampon de sortie (4), constitué d'une mémoire annulaire d'éléments de données, à un collecteur de données (2), dans lequel jusqu'à quatre répétitions du bloc de données avec des brouilleurs qui sont différents des transmissions précédentes, et en ce que, dans la quatrième répétition, le premier brouillage est à nouveau démarré et le canal de transmission est considéré comme étant complètement perturbé.

11. L'Appareil selon la revendication 10, dans lequel le tampon d'entrée (3) est constitué d'une mémoire annulaire pour des éléments de données.

12. L'Appareil selon la revendication 10, dans lequel un indice (7) qui indique le dernier élément de données inoccupé et qu'un élément de données du tampon d'entrée (3) est constitué d'une mémoire pour des données (11) de la taille telles que des données dans un bloc de données transmis par l'intermédiaire du canal, en tant qu'informations de longueur (12) pour les données, en tant que bit de commande (13) et en plus en tant que variable de commande (14) dans laquelle une pluralité d'états sont stockés.
